# EUROPEAN PATENT APPLICATION

(11) **EP 4 498 252 A1**
(43) Date of publication of application: **29.01.2025**
(21) Application number: 24190890.4
(22) Date of filing: 25.07.2024
(51) Int. Cl.: G06F 11/34, G06F 11/36

(54) **USER INTERFACE (UI) COMPONENT ACCESSIBILITY TESTING**

(30) Priority: 26.07.2023 US 202363515596 P
(71) Applicant: Evinced Ltd., 6701508 Tel Aviv (IL)
(72) Inventor: Goren, Daniel, 7696500 Kfar Bilu (IL); Synett, Yossi, 4535208 Hod Hasharon (IL); Sorin, Itay, 6330417 Tel Aviv (IL); Moav, Gal, 6226303 Tel Aviv (IL); Fleishman, Shahar, 4522796 Hod Hasharon (IL); Rizhniv, Yurii, Lviv (UA)
(74) Representative: Beck Greener LLP

(57) **Abstract**

A method for analyzing Web content includes receiving a request to validate accessibility compliance of a target User Interface (UI) component in the Web content. In response to the request, executable code is run, including (i) simulating dynamic user interaction with the target UI component, (ii) monitoring a reaction of the target UI component to the simulated user interaction, and (iii) validating the accessibility compliance of the target UI component based on the reaction to the simulated dynamic user interaction.

## Description

### FIELD OF THE INVENTION

The present invention relates generally to accessibility of Web content, and particularly to methods and systems for accessibility testing of User Interface (UI) components.

### BACKGROUND OF THE INVENTION

Content displayed to users is often required to be accessible to people with disabilities. For this purpose, Web browsers and applications sometimes interface with Assistive Technologies (AT), such as screen readers or magnification software. Keyboards are also sometimes considered an assistive technology. The World Wide Web Consortium (W3C) has published a suite of standards that specify a framework of accessible Web content. Relevant standards include, for example, W3C Recommendations "Web Content Accessibility Guidelines (WCAG) 2.2," October 5, 2023, "Accessible Rich Internet Applications (WAI-ARIA) 1.2," June 6, 2023, and "ARIA in HTML," May 7, 2024, which are incorporated herein by reference.

ARIA also provides an online Authoring Practices Guide (APG), which defines multiple User Experience (UX) patterns or component types that can operate with assistive technologies. The APG details the implementation requirements for both accessibility semantics as well as keyboard interactions.

### SUMMARY OF THE INVENTION

An embodiment of the present invention that is described herein provides a method for analyzing Web content. The method includes receiving a request to validate accessibility compliance of a target User Interface (UI) component in the Web content. In response to the request, executable code is run, including (i) simulating dynamic user interaction with the target UI component, (ii) monitoring a reaction of the target UI component to the simulated user interaction, and (iii) validating the accessibility compliance of the target UI component based on the reaction to the simulated dynamic user interaction.

In some embodiments, simulating the dynamic user interaction includes modifying an object model of the Web content. In some embodiments, simulating the dynamic user interaction includes simulating one or more user actions that navigate between elements of the target UI component.

In an embodiment, the executable code includes (i) one or more static evaluators that evaluate parameters of the target UI component at given points in time, and (ii) one or more dynamic evaluators that simulate the dynamic user interaction, and the dynamic evaluators invoke the static evaluators.

In a disclosed embodiment, simulating the dynamic user interaction includes adding to the Web content at least one additional element that precedes or follows the target UI component, and simulating one or more user actions that navigate between the additional element and the target UI component.

In an example embodiment, receiving the request includes receiving a type of the target UI component, and running the executable code includes selecting, based on the type, a test suite to be applied to the target UI component. In another embodiment, the method further includes automatically identifying a type of the target UI component, and running the executable code includes selecting a test suite to be applied to the target UI component based on the type.

In an example embodiment, receiving the request includes receiving a location indication indicative of a location of the target UI component in the Web content, and running the executable code includes identifying a root of the target UI component within the Web content based on the location indication. In another embodiment, the method further includes automatically identifying a location of a root of the target UI component within the Web content.

In an embodiment, analysis of the Web content is performed in a non-browser environment, and validating the accessibility includes predicting an expected accessibility of the target UI component in a browser environment. In an embodiment, validating the accessibility includes modifying an event listener to collect information associated with the target UI component.

There is additionally provided, in accordance with an embodiment of the present invention, a system for analyzing Web content. The system includes a memory and one or more processors. The memory is configured to store the Web content. The one or more processors are configured to receive a request to validate accessibility compliance of a target User Interface (UI) component in the Web content, and to run, in response to the request, executable code including (i) simulating dynamic user interaction with the target UI component, (ii) monitoring a reaction of the target UI component to the simulated user interaction, and (iii) validating the accessibility compliance of the target UI component based on the reaction to the simulated dynamic user interaction.

The present invention will be more fully understood from the following detailed description of the embodiments thereof, taken together with the drawings in which:

### BRIEF DESCRIPTION OF THE DRAWINGS

Fig. 1 is a block diagram that schematically illustrates a system for accessibility validation of User Interface (UI) components, in accordance with an embodiment of the present invention;
Fig. 2 is a flow chart that schematically illustrates a method for accessibility validation of UI components, in accordance with an embodiment of the present invention; and
Fig. 3 is a diagram that schematically demonstrates identification and accessibility validation of multiple UI components on a Web page, in accordance with an embodiment of the present invention.

### DETAILED DESCRIPTION OF EMBODIMENTS

### OVERVIEW

Embodiments of the present invention that are described herein provide improved methods and systems for validating the accessibility of User Interface (UI) components that appear in Web pages, Internet applications and other types of Web content.

Examples of UI components that can be tested using the disclosed techniques include, but are not limited to, buttons, toggle switches, drop-down lists, radio buttons and radio groups, text fields, check boxes, sliders, notifications and alerts, etc. Accessibility tests may verify, for example, that a UI component is accessible using keyboard-only interaction, or that a UI component is compatible with screen readers or other assistive technologies.

In some embodiments, a disclosed UI component tester comprises executable code, e.g., a library, that is imported into a test environment that processes Web content. The test environment may comprise, for example, a browser program or a JavaScript Document Object Model (JSDOM) environment. By way of example, the description that follows refers to UI components embedded in a Web page displayed by a browser. The web page is represented by a Document Object Model (DOM). Generally, however, the disclosed techniques are applicable in a similar manner to other suitable types of Web content, object models and test environments.

In some embodiments, the UI component tester (referred to herein as simply "component tester" or "tester" for brevity) receives a request to validate the accessibility compliance of a target UI component in a Web page. In some embodiments the request specifies (i) the type of the UI component and (ii) a location indication that is indicative of the location of the target UI component in the Web page. In other embodiments the tester identifies the type and/or location of the target UI component automatically, without user input.

In response to the request, the tester detects the root of the target UI component in the DOM of the web page. The tester also selects a test suite that specifies one or more evaluations suitable for testing UI components of the specified type. The tester then executes the various evaluations in the test suite by interacting with the DOM Application Programming Interface (API). Detected violations are logged and reported.

Some of the evaluations in the test suite may be static, whereas other evaluations may be dynamic. In a static evaluation, the tester evaluates one or more parameters of the target UI component at a certain point in time. The tester validates the accessibility compliance of the target UI component and reports any detected violations. In a dynamic evaluation, the tester modifies the DOM in a way that simulates dynamic user interaction with the target UI component, and monitors the reaction of the target UI component to the simulated user interaction. A dynamic evaluation may invoke one or more of the static evaluations before and/or after modifying the DOM. Based on the monitored reaction of the target UI component to the simulated user interaction, the tester validates the accessibility compliance of the target UI component and reports any detected violations.

In some embodiments, the tester also tests the accessibility aspects of user navigation to and/or from the target UI component. For this purpose, in a preparatory stage, the tester adds one or more additional DOM elements to the Web page, which precede and/or follow the target UI component. As part of the dynamic evaluations, the tester may simulate user navigation (e.g., using TAB presses or arrow keys) from a preceding DOM element to the target UI component, and/or from the target UI component to a following DOM element.

The disclosed techniques thus provide a comprehensive, fully automated tester for accessibility validation of UI components. Using the disclosed tester, developers can produce more accessible UI components with minimal effort and without requiring intimate familiarity with accessibility requirements.

Some implementations of the disclosed techniques use computer vision algorithms to assess visual aspects of the target UI component at various stages of the evaluation. The visual aspects can be compared to the semantic representation of the UI component in the DOM. Some implementations use a combination of computer vision and neural networks, e.g., for identifying the type and/or location of the target UI component.

### SYSTEM DESCRIPTION

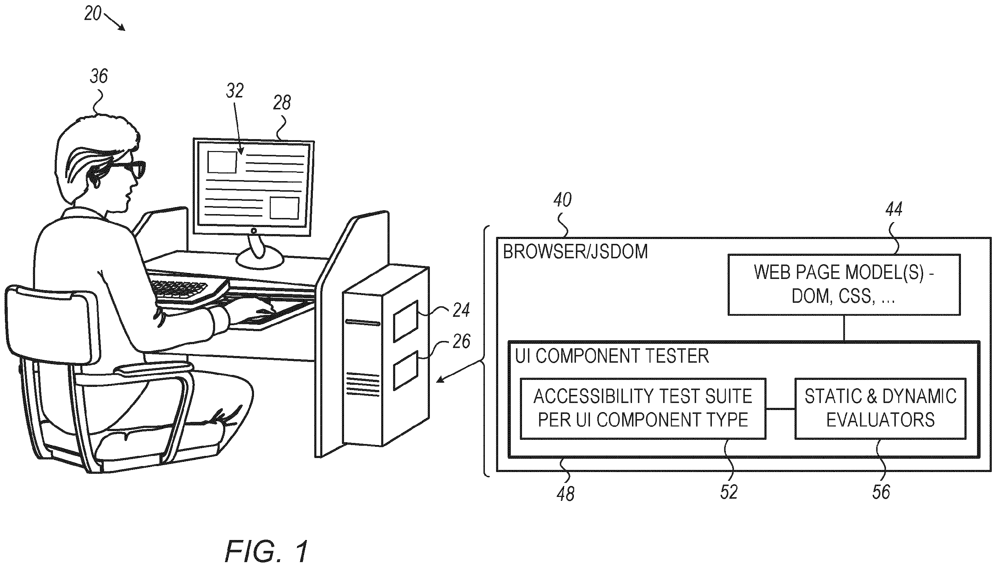

Fig. 1 is a block diagram that schematically illustrates a system 20 for accessibility validation of User Interface (UI) components, in accordance with an embodiment of the present invention. System 20 comprises a processor 24, a memory 26 and a display 28. Among other tasks, processor 24 displays Web pages 32 to a user 36 on display 28. A given Web page 32 comprises one or more UI components. Memory 26 is used for storing Web pages 32 and/or any other suitable information.

In the present example, processor 24 runs a Web browser 40, e.g., Google Chrome or Mozilla Firefox. In alternative embodiments, a JSDOM environment can be used instead of a browser. To render and display a given Web page 32, browser 40 holds one or more object models 44 of the page, e.g., a DOM and/or a Cascading Style Sheets Object Model (CSSOM).

Browser 40 further runs a UI component tester 48 that carries out the disclosed accessibility validation techniques. Tester 48 comprises executable code, e.g., a Software Development Kit (SDK) or library that is imported into browser 40. Tester 48 comprises multiple accessibility test suites 52 (also referred to as "component test flows") specified for multiple respective types of UI components. In an embodiment, test suites 52 are designed to validate the types of UI components and accessibility requirements specified in the ARIA APG and/or W3C WCAG. Test suites 52 are typically generated while considering the various standards and guidelines, as well as additional knowledge gained through research and experimentation.

Tester 48 further comprises a set of static and dynamic evaluators 56. The use of test suites 52 and evaluators 56 for accessibility validation of UI components is described in detail below. Processor 24 typically stores the various data structures and other information being used, e.g., model(s) 44 and test suites 52, in memory 26.

The configuration of system 20 and its various components, as shown in Fig. 1, is an example configuration that is chosen purely for the sake of conceptual clarity. In alternative embodiments, any other suitable configuration can be used. For example, in some configurations the Web content (e.g., Web pages) being validated is not necessarily displayed to a user. Elements that are not necessary for understanding the principles of the present invention have been omitted from the figures for clarity.

The various elements of system 20 may be implemented in hardware, e.g., in one or more Application-Specific Integrated Circuits (ASICs) or FPGAs, in software, or using a combination of hardware and software elements. Typically, processor 24 comprises a general-purpose computer, which is programmed in software to carry out the functions described herein. The software may be downloaded to the computer in electronic form, over a network, for example, or it may, alternatively or additionally, be provided and/or stored on non-transitory tangible media, such as magnetic, optical, or electronic memory.

### EVALUATORS AND TEST SUITES

### Evaluators

Evaluators 56 form the basic modular building blocks of the accessibility tests carried out by tester 48. Each evaluator comprises a function, or other executable code, that performs a specific accessibility check. Evaluators 56 can be divided into static evaluators and dynamic evaluators.

Static evaluators: A static evaluator calculates one or more specific values of a UI component at a given point in time. Static evaluators provide insights into the accessibility of the UI component based on its attributes, relations, styling properties, content, etc. Static evaluators are useful, for example, for conducting initial assessments of accessibility or for evaluating UI components that do not require user interaction or dynamic behavior. Examples of static evaluations comprise checking the presence of narratable text, verifying proper DOM structure, and ensuring the validity of ARIA attributes.

Dynamic evaluators: A dynamic evaluator interacts with the DOM and tracks values throughout a sequence of interactions with the UI component. Dynamic evaluators provide a more comprehensive assessment of the UI component's accessibility, by considering its dynamic behavior, responsiveness, and interactivity. Dynamic evaluators can simulate user actions such as keyboard navigation or mouse interactions and evaluate the real-time responses of the UI component to these interactions. Dynamic evaluators are useful, for example, for assessing UI components that rely on user interactions, such as forms, menus or interactive widgets. Dynamic evaluators can also call static evaluators between interactions to gather additional information and enhance the overall accessibility assessment. Examples of dynamic evaluations comprise checking the tab-presses focus management, keyboard navigation within a component, or keyboard activation of interactable components.

Some non-limiting examples of useful evaluators 56 include the following:
▪ Keyboard Evaluators: Evaluators that focus on assessing the UI component's accessibility for keyboard-only users. Such evaluators may ensure, for example, proper focus management, keyboard operability and adherence to keyboard navigation guidelines.
▪ Screen Reader Evaluators: Evaluators that evaluate the UI component's compatibility with screen readers. Such evaluators may verify, for example, that the UI component is properly labeled, that interactive elements of the UI component are announced correctly, and the information is conveyed effectively through assistive technology.
▪ ARIA Roles Evaluators: Evaluators focusing on assessing the correct usage and application of ARIA roles within the UI component. Such evaluators may verify, for example, that appropriate ARIA roles are used to describe the purpose and behavior of elements in the UI component, or that assistive technologies can properly interpret and convey the UI component's structure and functionality.
▪ Element Relations Evaluators: Evaluators that examine the relationships between elements within the UI component. These evaluators may assess, for example, whether elements that are intended to be associated or dependent on one another have the appropriate ARIA attributes or semantics to establish these relationships. For example, such an evaluator may check that a label is correctly associated with its corresponding input field, or that a menu and its associated menu items are properly connected.
▪ Active Selection State Evaluators: Evaluators that focus on assessing the state of the active selection within the component. Such evaluators may verify, for example, that the component accurately communicates the current selection state to assistive technologies and users. For example, in a multi-select dropdown, an evaluator may check that the selected options are properly marked and announced to screen readers.

In alternative embodiments, any other suitable evaluators can be used. In some embodiments, the checks performed by evaluators 56 can be roughly classified into the following types:
▪ Syntactic checks: checks that assert that DOM elements exist with the expected roles, states, relations, attributes, values and labels.
▪ Event observation checks: Checks that assert that expected DOM events have been fired with the correct properties.
▪ Computer vision checks: Checks that use machine learning models to detect visual states of components and ensure that they match the semantic representation in the DOM.

### Test suites

Each test suite 52 (also referred to as "component test flow") comprises executable code that tests a respective type of UI component. A given test suite 52 invokes one or more of evaluators 56 (static and/or dynamic) in a specified sequence, so as to perform the accessibility tests defined for the corresponding type of UI component.

Test suites 52 are typically implemented as classes or objects, with each type of UI component having its own unique class or object dedicated to storing relevant information about the component and orchestrating the order and selection of tests.

In an example embodiment, each type of UI component supported by tester 48 has a respective unique test suite 52, which serves as a container for storing relevant information related to the component being tested. The stored data may comprise, for example, metadata such as the component's name, description, accessibility requirements, and/or any other suitable attribute.

When invoked, a given test suite 52 imports the relevant evaluators 56 into the test suite object. The test suite comprises a predefined sequence of invocations of evaluators 56 (static and/or dynamic), so as to perform the accessibility tests defined for that component type.

In some embodiments, a given test suite 52 also comprises one or more utility functions that are shared among UI components of the corresponding type. The utility functions are designed to streamline the testing process and enhance code modularity. Utility functions may comprise commonly used operations or calculations specific to a group of UI components, allowing for efficient and reusable code. One example of a utility function is a function that gathers information about members of a composite UI component (e.g., gets the reference to tabs in a tablist, to radio buttons in a radio group, etc.). Another example is a utility function that runs heuristics on UI components to get the expected-to-be-selected element, e.g., to predict the active tab in a tablist, the selected radio button in a radio group, etc. By centralizing such utility functions within the test suite, the testing process becomes more streamlined, less error-prone, and promotes code reusability across multiple components.

Typically, test suites 52 are designed to align with industry standards and best practices for accessibility. In an example embodiment, test suites 52 ensure compliance with the W3C Web Content Accessibility Guidelines (WCAG), cited above. Test suites 52 may also take into account the ARIA Pattern Guide, which provides guidance on implementing ARIA roles, states, and properties effectively. In some embodiments, test suites 52 are enriched, beyond the W3C requirements.

### UI COMPONENT ACCESSIBILITY VALIDATION METHOD

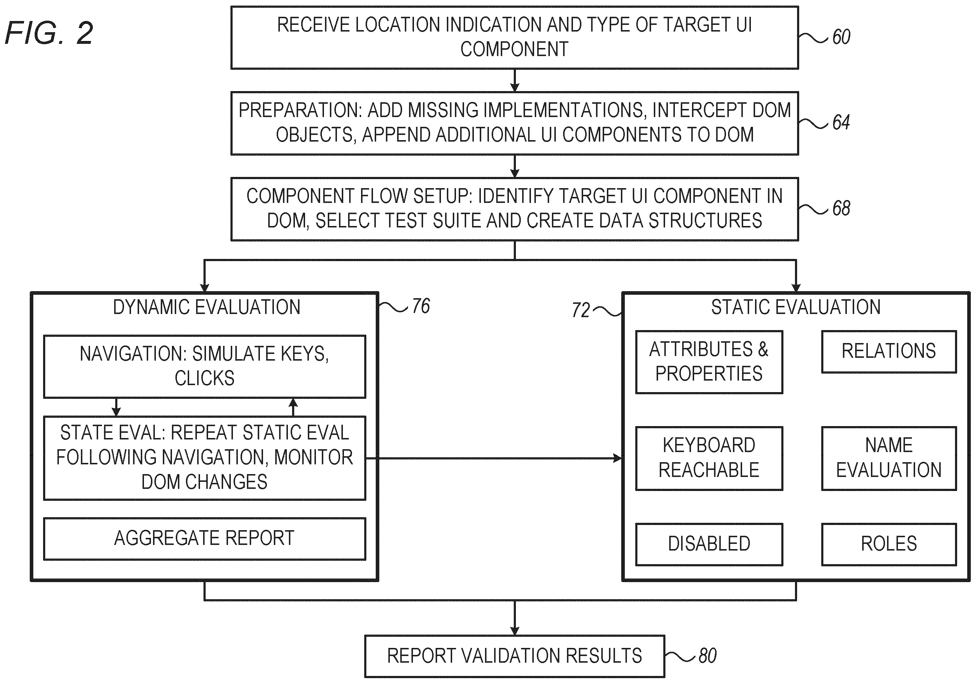

Fig. 2 is a flow chart that schematically illustrates a method for accessibility validation of UI components by tester 48, in accordance with an embodiment of the present invention. In this embodiment, tester 48 comprises a library that is imported into browser 40. The library comprises a set of "analyze" functions, each function comprising executable code designed to validate a respective type of UI component. Examples of analyze functions include "analyzeButton", "analyzeLink", "analyzeListbox", etc.

The method of Fig. 2 begins with tester 48 being invoked by a user to validate a UI component ("target component"), at an invocation stage 60.

The user may notify tester 48 of the type of the target component (e.g., whether the UI component to be tested is a button, a link, etc.). In an embodiment, the user indicates the type of component by calling the appropriate analyze function, i.e., the function corresponding to the type of the target component. In other embodiments, tester 48 may identify the type of the target component automatically, i.e., without an explicit indication from the user.

In some embodiments, although not necessarily, the user provides tester 48 with a location indication, which is indicative of the location of the root of the target component in the DOM of the Web page. Alternatively, tester 48 may identify the location of the target component in the DOM, and/or the type of component, without an explicit location indication from the user.

In some embodiments, the library may comprise an "analyzePage" function that, when invoked, causes tester 48 to validate all UI components that the tester is able to identify in the page. Full page analysis can also be invoked when the user does not provide the tester with any indications as to the type and location of the target UI component. In such a case, the tester typically scans the DOM starting from the DOM root. During scanning, the tester creates multiple instances of test suites 52 based on the visual appearance and/or DOM attributes of DOM elements being scanned.

In some embodiments, certain tests can receive optional parameters that alter the test flow. Tester 48 may comprise an API that (i) allows the user to provide these parameters, and (ii) hints to the user which parameters are available for a specific component type.

At a preparation stage 64, tester 48 performs various preparatory tasks. The preparation stage typically depends on whether the tester 48 runs in a browser environment or in a JSDOM environment.

A JSDOM environment, for example, lacks the API that a browser exposes, and also lacks the means for calculating many style-related properties of DOM elements. When running in a JSDOM environment, tester 48 should verify that actual accessibility conformance would be met in a real browser. For this purpose, in some embodiments, tester 48 may tamper with the JSDOM environment to compute and collect relevant information. This tampering may be performed, for example, once the library of tester 48 is imported to the test environment, and every time a UI component analysis is invoked.

In an example embodiment, tester 48 adds missing implementations so as to ensure that the results of the accessibility tests remain valid in the testing environment as in an actual browser. For example, tester 48 emits DOM mutations, extends the style computation, and fills missing functions of the document object.

When running in a browser environment, on the other hand, tester 48 may rely on the browser implementation of the DOM API to calculate the various needed values. Nevertheless, in some cases the browser does not expose certain information required to establish that UI components have been implemented properly. For example, the browser's DOM API may not provide a mechanism for querying event listeners on an element. Tester 48 may tamper with the page's event listener mechanisms in order to collect the missing information.

In an example embodiment, tester 48 overrides some of the exposed functionality of Browser Object Model (BOM) objects, in order to log their behavior and use the information in certain accessibility tests. For example, the Navigation manager and Events handler of the BOM may be replaced with objects that carry out the original functionality but also log and report every access to them made by target components.

Typically, the tampering operation involves modification of globally available prototypes and their methods. By tampering with the environment in which the page is tested, the tester can intercept the execution of these prototypes/methods by the target UI component, in order to add logs to be used by evaluators. The tester may also modify the behavior of the prototypes/methods in question, to ensure the tester's stability and report coherence. For example, the tester may cancel navigation events triggered by the tester's interactions, to maintain the same Web content context during the test.

For example, to overcome the issue of accessing the target UI component's event listeners, the tester may add a new event listener to the DOM. The new event listener captures all events before dispatching them to perform their original task. During the capturing phase, the tester modifies the event object (which is about to be dispatched) to log any access to the event's methods by the target UI component. In this manner, the tester is able to monitor whether an event handler exists on the target UI component, by providing it with an event that relays information to the tester.

As another example, to identify whether an author activated a modal element in an accessible fashion (using the 'showModal' method instead of the 'show' method), the tester may rewrite the globally available prototype of HTMLDialogElement. The tester may modify the calls to these methods to new functions that report metrics about the activated method to the tester, and only then perform the method's original operation. Then, when a dialog in the Web page attempts to access these methods, the tester is also notified.

The preparations listed above may be performed, although not necessarily, on import, i.e., after tester 48 is imported into the test environment. The preparations listed below are typically performed on invocation, i.e., when a user invokes tester 48 to validate a certain target UI component.

In an example embodiment, tester 48 may add one or more elements to the DOM of the Web page that contains the target UI component. Tester 48 compares the target UI component to the added elements after certain interactions, to evaluate its effect on properties such as background visibility, screen reader availability and keyboard behavior.

In another example embodiment, tester 48 may enrich the DOM tree of the Web page with accessibility-related values. The tester may calculate how the accessibility API behaves for elements in a real browser environment. Example techniques of this sort can be found, for example, in PCT Application PCT/IB2024/055792, filed June 13, 2024, whose disclosure is incorporated herein by reference. The tester may consider, for example, the styles and attributes of the elements, their relations with other elements, etc. This step enables the tester to obtain accurate information regarding the target component's accessibility even when the testing environment does not provide this information directly.

In an embodiment, tester 48 sets up "mutation observers" - executable code that keeps track of changes to the UI component (e.g., changes in element attributes and properties, removal or addition of elements to the DOM, etc.). The tester may recalculate the enriched accessibility values during simulated user interaction with the target UI component.

In another preparatory task, tester 48 creates an instance of a service that simulates user interactions with the DOM. Simulated interactions may include, but are not limited to, clicks, focus changes, key presses and cursor management. The interaction service supports interactions across different testing environments and allows tester 48 to operate across multiple frameworks. In some embodiments, the interaction service can wait for an expected state until a timeout is reached. For example, the interaction service can wait for an element of the target UI component to be focused after a certain interaction. This task typically takes into account animations and delays that may affect the test outcome.

At a component flow setup stage 68, tester 48 identifies the target UI component in the DOM of the Web page, and selects the appropriate test suite 52 for testing the target component. The task of locating the DOM element that is the root of the target UI component is highly non-trivial, for several reasons. For example, the root element may be wrapped in containers, may comprise owned elements that are not direct descendants, and may even disappear from the DOM in certain conditions.

In some embodiments, the user provides an explicit location indication for the target component. The location indication may comprise, for example, a reference to the DOM element that is the root of the target component. The reference may be a DOM element, a Cascaded Style Sheets (CSS) selector string, contained text, an ID, an expected role, a callback that returns a DOM element, or any other suitable location indication. In other embodiments, the tester can use heuristic methods to identify the correct root of the target UI component within the DOM, even if the root is not provided by the user.

Tester 48 may use various techniques to identify the type of the target UI component. For example, tester 48 may use a computer vision model, a Large Language Model (LLM), a graph neural network or similar classification model for classifying the DOM nodes, or any other suitable model that is trained to identify the existence and types of supported components on a Web page. The tester may use the calculated accessible "role" of elements to identify their component type. As yet another example, the tester may use suitable heuristics-based element attributes to identify the component type. Having identified the type of the target UI component, tester 48 selects the appropriate test suite 52 for testing this type of UI component, imports the selected test suite and creates the data structures needed for the testing.

At this point, static evaluation 72 and dynamic evaluation 76 begin. As explained above, the selected test suite specifies a sequence of static evaluations (using one or more of the static evaluators) and/or dynamic evaluations (using one or more of the dynamic evaluators). Tester 48 performs this sequence as specified.

At least part of the selected test suite simulates dynamic user interaction with the target UI component. As seen in Fig. 2, dynamic evaluation 76 simulates user actions such as navigation to the target component, from the target component and/or between elements of the target component. Simulated user actions may comprise, for example, key presses (e.g., TAB and arrow presses), mouse movements and clicks, etc.

Typically, the dynamic evaluators in dynamic evaluation 76 invoke one or more of the static evaluators of static evaluation 72 before and/or after simulated user actions. In this manner, the accessibility of the target component can be validated on an ongoing basis during the dynamic simulation of user interaction with the component. Dynamic evaluation 76 aggregates a report.

At the end of the test sequence, the report may comprise, for example, a list of the performed validations, a list of failed validations, an aggregate pass/fail indication, suggestions for modifying the target component to overcome the failures, etc.

At a reporting stage 80, tester 48 outputs the report to the user and/or to some computerized system. In various embodiments, tester 48 may format and output the report in various ways. For example, the report can be customized to change violation severities, refer to the failing elements, ignore specific evaluators, etc.

In some embodiments, the report is formatted in a human-friendly format, e.g., as a JSON, CSV, HTML, PDF file or other suitable format. Additionally, or alternatively, the report is formatted to be accessible to automation tools such as continuous integration pipelines.

In an example embodiment, the report provides a detailed breakdown of the test results of each evaluator 56 employed within the test suite. Each reported test is accompanied with a link to documentation that offers insights about the accessibility impact of the validated criteria, and/or tutorials for developers to incorporate accessibility in their components.

### EXAMPLE - ACCESSIBILITY VALIDATION OF RADIO GROUP COMPONENT

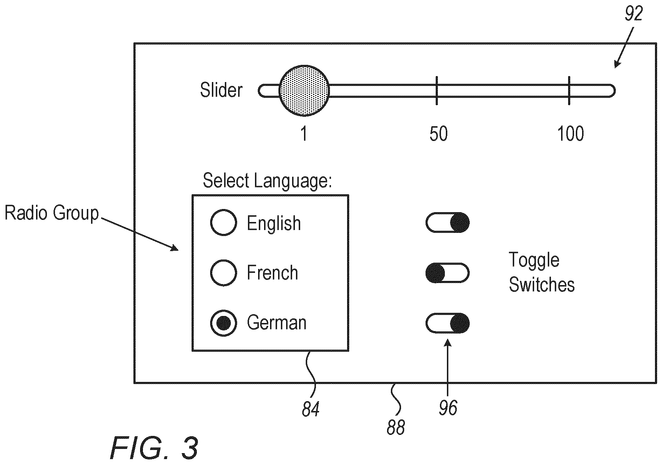

Fig. 3 is a diagram that schematically demonstrates identification and accessibility validation of multiple UI components on a Web page, in accordance with an embodiment of the present invention. The present example shows a Web page 88 that comprises three UI components: (i) a radio group component 84, a slider 92 and a set of toggle switches 96.

In addition, to enable testing of focus management, in the present example navigation to and from radio group 84, tester 48 adds two dummy elements to the DOM of page 88. One dummy DOM element precedes radio group 84 in the focus sequence of the page. The other dummy DOM element follows radio group 84 in the focus sequence. The terms "precede" and "follow" in this context refer to the order of navigation using arrow keys and/or TAB presses. Dummy elements of this sort may also be added before and after other UI components, e.g., slider 92 and/or switches 96.

In the present example, tester 48 runs a full-page analysis that includes automatic detection of the type and location (in the DOM) of each UI component on page 88. Once the types and locations are identified, the tester proceeds to validate the accessibility of each detected UI component.

Validation of radio group 84, for example, is performed in accordance with the flow of Fig. 2. Preparation stage 64 in this example comprises the following actions by tester 48:
▪ Missing functionality is implemented.
▪ Event manager is intercepted to log event handlers assignment.
▪ The root of target component 84 is resolved and used to initialize the Radio Group Component test suite 52.
▪ Focusable dummy DOM elements are added before and after radio group 84, to assess its focus management.
▪ Tester 48 calculates the enriched values for the above elements in the DOM. Tester 48 also begins observing mutations to the DOM.
▪ The interaction service, which simulates dynamic user interaction with the target component, is initialized.

At this stage, tester 48 begins evaluating radio group component 84 as orchestrated by the corresponding test suite 52. This stage corresponds to stages 72 and 76 of Fig. 2 and, in the present example, includes the following actions by tester 48:
▪ The owned radio buttons are identified and stored using the utility functions.
▪ Static evaluators report their results to the owning test suite:
   ∘ The group screen readable name is evaluated.
   ∘ Each radio button screen readable name is evaluated.
   ∘ The group's aria-role is evaluated, as well as the radio buttons.
   ∘ If the aria-posinset and aria-setsize attributes are available, the tester checks whether they are valid.
   ∘ The active selection state of the group is evaluated - no more than one radio button can be selected, and all the radio buttons should have valid attributes that reflect their selection state.
▪ Dynamic evaluators report their results to the owning test suite:
   ∘ Focus management test - Focus is moved to the dummy element added before the radio group. Tab press is sent, and the focus is expected to move to the selected radio button of radio group 84 (or to the first radio button, if no button is selected). After this simulated interaction, the active selection static evaluator runs again, to check if the radio group is inaccessible after the interaction. Then, Tab is pressed once again and the focus is expected to exit the group (to the dummy element added following radio group 84). The active selection static evaluator runs once again. Finally, the test is repeated using Shift+Tab, starting from the dummy element appended after the radio group.
   ∘ Keyboard navigation test - If radio group 84 is a semantic HTML component, the keyboard navigation is accessible and the test is skipped.
   ∘ Otherwise, the first radio group member is activated by clicking it. Then, as long as there are radio buttons in the group, the "Right" arrow is pressed and the selection is expected to move to the next radio button. The static focus evaluator and active selection static evaluator are running, expecting the selection and focus to be moved to the next radio button. Finally, the test is repeated for each arrow key.

At the end of the process, tester 48 outputs a test report. An example of a detailed test report for the validation of a radio group component is given in U.S. Provisional Patent Application 63/515,596, cited above.

The example above is a simple demonstration, which is chosen purely for the sake of conceptual clarity. In alternative embodiments, any other suitable validation process can be used.

It will be appreciated that the embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

## Claims

1. A method for analyzing Web content, the method comprising:
receiving a request to validate accessibility compliance of a target User Interface (UI) component in the Web content; and
in response to the request, running executable code including (i) simulating dynamic user interaction with the target UI component, (ii) monitoring a reaction of the target UI component to the simulated user interaction, and (iii) validating the accessibility compliance of the target UI component based on the reaction to the simulated dynamic user interaction.

2. The method according to claim 1, wherein simulating the dynamic user interaction comprises modifying an object model of the Web content.

3. The method according to claim 1, wherein simulating the dynamic user interaction comprises simulating one or more user actions that navigate between elements of the target UI component.

4. The method according to claim 1,
wherein the executable code comprises (i) one or more static evaluators that evaluate parameters of the target UI component at given points in time, and (ii) one or more dynamic evaluators that simulate the dynamic user interaction; and
wherein the dynamic evaluators invoke the static evaluators.

5. The method according to claim 1, wherein simulating the dynamic user interaction comprises adding to the Web content at least one additional element that precedes or follows the target UI component, and simulating one or more user actions that navigate between the additional element and the target UI component.

6. The method according to any of claims 1-5, wherein receiving the request comprises receiving a type of the target UI component, and wherein running the executable code comprises selecting, based on the type, a test suite to be applied to the target UI component.

7. The method according to any of claims 1-5, and comprising automatically identifying a type of the target UI component, wherein running the executable code comprises selecting a test suite to be applied to the target UI component based on the type.

8. The method according to any of claims 1-5, wherein receiving the request comprises receiving a location indication indicative of a location of the target UI component in the Web content, and wherein running the executable code comprises identifying a root of the target UI component within the Web content based on the location indication.

9. The method according to any of claims 1-5, and comprising automatically identifying a location of a root of the target UI component within the Web content.

10. The method according to any of claims 1-5, wherein analysis of the Web content is performed in a non-browser environment, and wherein validating the accessibility comprises predicting an expected accessibility of the target UI component in a browser environment.

11. The method according to any of claims 1-5, wherein validating the accessibility comprises modifying an event listener to collect information associated with the target UI component.

12. A system for analyzing Web content, the system comprising:
a memory, configured to store the Web content; and
one or more processors, configured to:
receive a request to validate accessibility compliance of a target User Interface (UI) component in the Web content; and
in response to the request, run executable code including (i) simulating dynamic user interaction with the target UI component, (ii) monitoring a reaction of the target UI component to the simulated user interaction, and (iii) validating the accessibility compliance of the target UI component based on the reaction to the simulated dynamic user interaction.

13. The system according to claim 12, wherein the one or more processors are configured to simulate the dynamic user interaction by modifying an object model of the Web content.

14. The system according to claim 12, wherein, in simulating the dynamic user interaction, the one or more processors are configured to simulate one or more user actions that navigate between elements of the target UI component.

15. The system according to claim 12,
wherein the executable code comprises (i) one or more static evaluators that evaluate parameters of the target UI component at given points in time, and (ii) one or more dynamic evaluators that simulate the dynamic user interaction; and
wherein the dynamic evaluators invoke the static evaluators.

16. The system according to claim 12, wherein, in simulating the dynamic user interaction, the one or more processors are configured to add to the Web content at least one additional element that precedes or follows the target UI component, and to simulate one or more user actions that navigate between the additional element and the target UI component.
